# FASCICULE DE BREVET EUROPEEN

(11) **EP 3 685 719 B1**
(45) Date de publication et mention de la délivrance du brevet: **15.12.2021**
(21) Numéro de dépôt: 20161243.9
(22) Date de dépôt: 25.06.2018
(51) Int. Cl.: A47J 43/046, A47J 27/00, A47J 27/10, A47J 36/16

(54) **APPAREIL ELECTROMENAGER DE PREPARATION CULINAIRE COMPORTANT UN RECEPTACLE INTERNE**
ELEKTROHAUSHALTSGERÄT ZUR ESSENSZUBEREITUNG, DAS EINEN INNENBEHÄLTER UMFASST
ELECTRICAL KITCHEN APPLIANCE COMPRISING AN INTERNAL CONTAINER

(30) Priorité: 03.07.2017 FR 1756272
(43) Date de publication de la demande: 29.07.2020
(62) Demande divisionnaire de: 18179680.6
(73) Titulaire: SEB S.A., 69130 Ecully (FR)
(72) Inventeur: DESHAYES, Jean-Louis, 53700 AVERTON (FR); NESPOUX, Johan, 53640 LE HORPS (FR); FERRON, Jean-Baptiste, 53940 SAINT-BERTHEVIN (FR)
(74) Mandataire: SEB Développement

(56) Documents cités:
- CN-U- 203 970 183
- FR-A1- 2 998 773
- US-A- 1 288 650
- US-A- 5 974 953

## Description

La présente invention concerne le domaine technique des appareils électroménagers de préparation culinaire comportant un outil de travail rotatif tournant dans un récipient de travail.

La présente invention concerne un appareil électroménager de préparation culinaire comportant un réceptacle interne prévu pour être disposé dans un tel récipient de travail.

Il est connu du document CN203970183 de réaliser un réceptacle interne pour récipient de travail d'un appareil électroménager de préparation culinaire, ce réceptacle interne étant prévu pour reposer à l'intérieur du récipient de travail. Ce réceptacle interne comprend une cuve présentant un fond et une paroi latérale. La paroi latérale présente un bord supérieur. Ce réceptacle interne comporte une anse rabattable montée pivotante sur le bord supérieur de la cuve et associée à un élément de rappel élastique. Toutefois le réceptacle interne est dépourvu de couvercle. L'anse rabattable est ainsi agencée à l'intérieur de l'enceinte formée par le récipient de travail fermé par un couvercle. L'appareil électroménager de préparation culinaire est chauffant. L'anse rabattable est formée par une tige reliant les deux points de pivot. Un inconvénient de la réalisation de ce document est que le retrait du réceptacle interne peut être délicat, notamment si les aliments présents dans le réceptacle interne ne sont pas répartis assez uniformément, ou s'ils sont chauds.

Un objet de la présente invention est de proposer un réceptacle interne du type précité, dont la manipulation est facilitée.

Un autre objet de la présente invention est de proposer un réceptacle interne du type précité, dont la réalisation est simplifiée.

Ces objets sont atteints avec un appareil électroménager de préparation culinaire, comportant un récipient de travail, un couvercle principal fermant le récipient de travail, un organe d'entraînement en rotation agencé dans le récipient de travail, un réceptacle interne disposé dans le récipient de travail, et un outil de travail rotatif accessoire agencé dans le réceptacle interne et entraîné en rotation par l'organe d'entraînement en rotation, le réceptacle interne comprenant une surface d'appui inférieure reposant à l'intérieur du récipient de travail, le réceptacle interne comprenant une cuve présentant un fond et une paroi latérale, la paroi latérale présentant un bord supérieur, du fait que le réceptacle interne comporte deux anses rabattables montées pivotantes entre une position rabattue et une position relevée, les deux anses rabattables étant de préférence agencées de manière symétrique par rapport à la cuve, et que le couvercle principal fermant le récipient de travail prend appui sur les anses rabattables disposées en position rabattue lorsque le réceptacle interne est en place dans le récipient de travail. Cette disposition permet de faciliter l'immobilisation du réceptacle interne disposé dans le récipient de travail.

Avantageusement alors, les deux anses rabattables sont agencées de manière symétrique par rapport à la cuve. Cette disposition permet un meilleur équilibrage du réceptacle interne.

Avantageusement encore, chacune des anses rabattables comporte deux extrémités montées pivotantes sur la cuve. En alternative, au moins l'une des anses rabattables pourrait par exemple être montée pivotante sur une embase portant la cuve, et/ou au moins l'une des anses rabattables pourrait compter une seule extrémité montée pivotante, l'autre extrémité étant libre.

Avantageusement alors, chacune des extrémités est montée pivotante dans un logement ménagé dans une patte issue du bord supérieur de la cuve. Cette disposition permet de simplifier la réalisation de la cuve.

Avantageusement encore, chacune des anses rabattables comporte au moins un organe d'appui réalisé en matériau souple. De préférence, ledit organe d'appui réalisé en matériau souple peut reposer sur la cuve lorsque l'anse rabattable occupe la position rabattue.

Avantageusement alors, chacune des anses rabattables comporte au moins un organe de préhension réalisé en matériau souple. Cette disposition permet de faciliter la préhension des anses rabattables, notamment en ambiance humide et/ou chaude. De préférence, chacun des organes de préhension comporte au moins un des organes d'appui. Cette disposition permet de simplifier la construction du réceptacle interne.

Avantageusement encore, les anses rabattables reposent sur le bord supérieur de la cuve lorsque lesdites anses rabattables sont disposées en position rabattue. Cette disposition permet également de faciliter la préhension des anses rabattables.

Avantageusement alors, lesdits organes d'appui reposent sur le bord supérieur de la cuve lorsque les anses rabattables sont disposées en position rabattue. Cette disposition permet également de faciliter la préhension des anses rabattables. De préférence alors, les organes de préhension s'étendent à distance du bord supérieure de la cuve lorsque les anses rabattables sont disposées en position rabattue.

Avantageusement encore, la cuve est métallique. Cette disposition permet d'améliorer les échanges thermiques avec le contenu de la cuve.

Avantageusement encore, la cuve comporte une cheminée axiale issue du fond. La cheminée axiale peut notamment recevoir un outil de travail rotatif. Cette disposition permet d'obtenir un réceptacle interne présentant une partie inférieure étanche dépourvue de parties mobiles telles qu'un axe de transmission traversant le fond de la cuve.

Avantageusement alors, l'appareil électroménager de préparation culinaire comporte des moyens de chauffe pour chauffer le récipient de travail.

Avantageusement alors, le récipient de travail est métallique et les moyens de chauffe sont portés par le récipient de travail. En alternative, le récipient de travail pourrait notamment reposer sur des moyens de chauffe portés par une base motorisée.

Avantageusement encore, le récipient de travail est monté amovible sur une base motorisée, et la base motorisée entraîne en rotation l'organe d'entraînement en rotation lorsque le récipient de travail est en place sur la base motorisée.

Avantageusement alors, chacune des anses rabattables comporte au moins un organe d'appui réalisé en matériau souple, et le couvercle principal fermant le récipient de travail comprime les organes d'appui lorsque les anses rabattables du réceptacle interne disposé dans le récipient de travail sont disposées en position rabattue et reposent sur le bord supérieur de la cuve, pour déformer élastiquement les organes d'appui et bloquer le réceptacle interne disposé dans le récipient de travail.

Avantageusement encore, le réceptacle interne comporte une embase portant des butées inférieures élastiquement déformables, ces butées inférieures sont prévues pour prendre appui dans le récipient de travail lorsque le réceptacle interne est disposé dans le récipient de travail, et le couvercle principal fermant le récipient de travail déforme élastiquement les butées inférieures pour bloquer le réceptacle interne dans le récipient de travail. Ainsi le couvercle principal fermant le récipient de travail prend appui sur le réceptacle interne par l'intermédiaire des anses rabattables disposées en position rabattue sur le bord supérieur de la cuve du réceptacle interne, et déforme élastiquement les butées inférieures pour bloquer le réceptacle interne disposé dans le récipient de travail.

Avantageusement encore, le couvercle principal comporte une surface inférieure d'appui annulaire prenant appui sur les anses rabattables disposées en position rabattue lorsque le réceptacle interne est en place dans le récipient de travail, et le récipient de travail comporte une surface supérieure d'appui annulaire portant le réceptacle interne en place dans le récipient de travail. Ces dispositions permettent une mise en place sans indexage du réceptacle interne dans le récipient de travail.

L'invention sera mieux comprise à l'étude d'un exemple de réalisation, pris à titre nullement limitatif, illustré dans les figures annexées, dans lesquelles :
- la figure 1 est une vue en coupe et en élévation d'un exemple de réalisation d'un appareil électroménager de préparation culinaire comportant une base motorisée et un récipient de travail, dans laquelle la partie supérieure du récipient de travail n'est pas représentée,
- la figure 2 est une vue en coupe et en élévation du récipient de travail illustré sur la figure 1, dans lequel est agencé un accessoire de préparation culinaire comprenant un réceptacle interne selon l'invention, le récipient de travail étant fermé par un couvercle principal de l'appareil électroménager de préparation culinaire,
- la figure 3 est une vue en perspective de dessus de l'accessoire de préparation culinaire illustré sur la figure 2,
- la figure 4 est une vue en perspective de dessous de l'accessoire de préparation culinaire illustré sur les figures 2 et 3,
- la figure 5 est une vue partielle en perspective du couvercle principal illustré sur la figure 2, et de la partie supérieure du réceptacle interne illsutré sur les figures 2 à 4, disposé dans le récipient de travail illustré sur les figures 1 et 2,
- la figure 6 est une vue partielle en perspective de la partie inférieure du réceptacle interne illustré sur les figures 2 à 5, disposé dans le récipient de travail illustré sur les figures 1, 2 et 5.

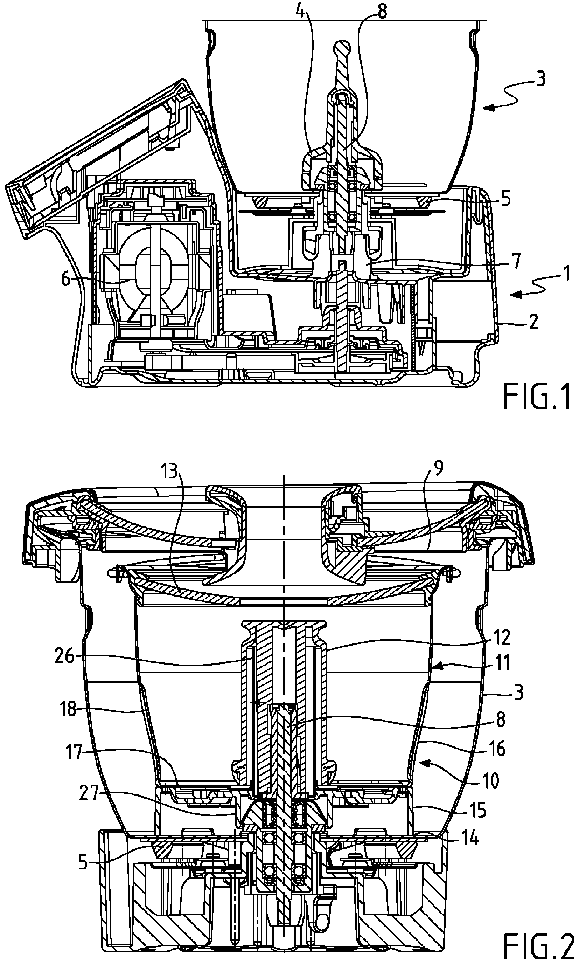

La figure 1 illustre un appareil électroménager de préparation culinaire 1 comportant une base motorisée 2 et un récipient de travail 3. Un outil de travail rotatif principal 4 est agencé dans le récipient de travail 3. La base motorisée 2 comprend un moteur 6 entraînant en rotation un organe entraîneur 7.

Tel que visible sur la figure 2, l'appareil électroménager de préparation culinaire 1 comporte un couvercle principal 9 fermant le récipient de travail 3. Le couvercle principal 9 est par exemple verrouillé par baïonnette sur le récipient de travail 3. Le couvercle principal 9 en position verrouillée est ainsi retenu sur le récipient de travail 3.

Selon une forme de réalisation préférée illustrée sur les figures, le récipient de travail 3 est monté amovible sur la base motorisée 2. Un organe d'entraînement en rotation 8 est agencé dans le récipient de travail 3. L'organe d'entraînement en rotation 8 est entraîné par l'organe entraîneur 7. Ainsi lorsque le récipient de travail 3 est en place sur la base motorisée 2, la base motorisée 2 entraîne en rotation l'organe d'entraînement en rotation 8. L'appareil électroménager de préparation culinaire 1 comporte des moyens de chauffe 5 pour chauffer le récipient de travail 3.

Plus particulièrement dans l'exemple de réalisation illustré sur les figures, les moyens de chauffe 5 sont portés par le récipient de travail 3. Le récipient de travail 3 est métallique. Le récipient de travail 3 est avantageusement réalisé en acier inoxydable.

Tel que représenté sur la figure 2, un réceptacle interne 11 est disposé dans le récipient de travail 3. Dans cette configuration, l'outil de travail rotatif principal 4 n'est pas présent dans le récipient de travail 3. Un outil de travail rotatif accessoire 12 est agencé dans le réceptacle interne 11. Le réceptacle interne 11 et l'outil de travail rotatif accessoire 12 forment un accessoire de préparation culinaire 10 pour le récipient de travail 3 de l'appareil électroménager de préparation culinaire 1. L'outil de travail rotatif accessoire 12 est entraîné en rotation par l'organe d'entraînement en rotation 8.

Tel que visible sur la figure 2, le réceptacle interne 11 comprend une surface d'appui inférieure 14 reposant à l'intérieur du récipient de travail 3. Plus particulièrement dans l'exemple de réalisation illustré sur les figures, la surface d'appui inférieure 14 repose sur un fond du récipient de travail 3.

Dans l'exemple de réalisation illustré sur les figures, le réceptacle interne 11 comprend une embase 15 et une cuve 16 portée par l'embase 15. La cuve 16 présente un fond 17 et une paroi latérale 18. La cuve 16 comporte une cheminée axiale 26 issue du fond 17. La cuve 16 comporte un bord supérieur 19.

Dans l'exemple de réalisation illustré sur les figures, l'accessoire de préparation culinaire 10 comporte un couvercle d'accessoire 13. Le couvercle d'accessoire 13 est prévu pour obturer au moins partiellement la cuve 16.

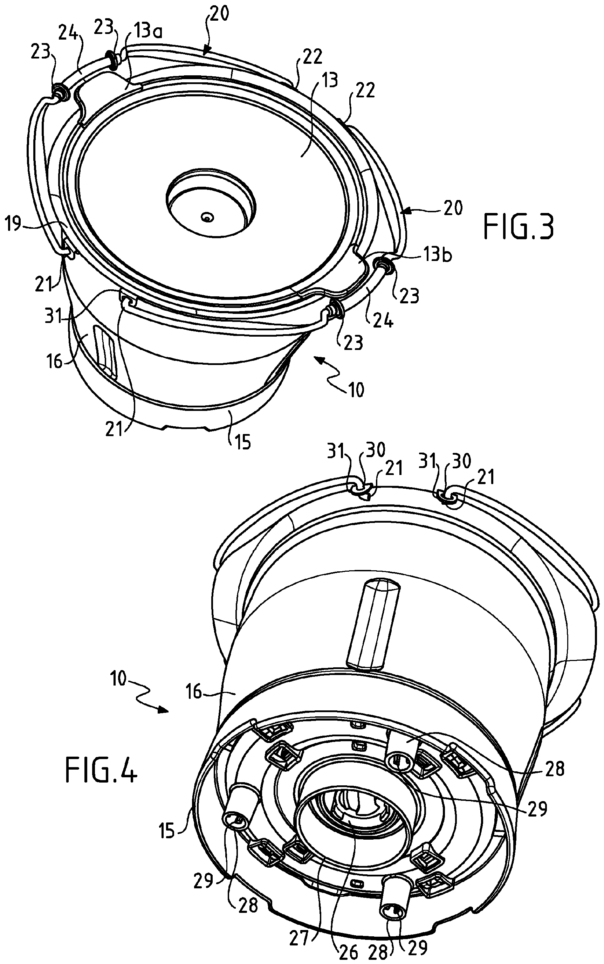

Tel que mieux visible sur les figures 3 et 4, le réceptacle interne 11 comporte deux anses rabattables 20. Les deux anses rabattables 20 sont montées pivotantes entre une position rabattue, illustrée sur les figures 2, 3 et 4, et une position relevée. De préférence, les deux anses rabattables 20 sont agencées de manière symétrique par rapport à la cuve 16.

Dans l'exemple de réalisation illustré sur les figures, les deux anses rabattables 20 sont montées pivotantes sur la cuve 16 entre leur position rabattue et leur position relevée. Plus particulièrement dans l'exemple de réalisation illustré sur les figures, chacune des anses rabattables 20 comporte deux extrémités 21, 22 montées pivotantes sur la cuve 16. Chacune des extrémités 21, 22 est montée pivotante dans un logement 30 ménagé dans une patte 31 issue du bord supérieur 19 de la cuve 16. La patte 31 visible sur la figure 3 est rabattue à partir de la périphérie du bord supérieur 19, l'autre patte non visible sur la figure 3 peut être réalisée de manière identique.

Tel que mieux visible sur la figure 3, chacune des anses rabattables 20 comporte deux organes d'appui 23. Les organes d'appui 23 sont réalisés en matériau souple. Les organes d'appui 23 sont par exemple surmoulés sur le corps de chacune des anses rabattables 20.

Dans l'exemple de réalisation illustré sur les figures, chaque organe d'appui 23 forme avantageusement un anneau entourant le corps de l'une des anses rabattables 20.

Tel que visible également sur la figure 3, chacune des anses rabattables 20 comporte un organe de préhension 24 réalisé en matériau souple. Les organes de préhension 24 sont par exemple surmoulés sur le corps de chacune des anses rabattables 20. Les organes de préhension 24 sont par exemple réalisés en silicone.

Selon le mode de réalisation préféré illustré sur les figures, chacun des organes de préhension 24 comporte deux organes d'appui 23. De préférence, chaque organe de préhension 24 est disposé entre deux des organes d'appui 23.

Tel que visible sur la figure 4, l'embase 15 du réceptacle interne 11 porte des butées inférieures 28. Les butées inférieures 28 sont réparties autour de la cheminée axiale 26. Les butées inférieures 28 sont réalisées en matériau souple. Les butées inférieures 28 sont avantageusement tubulaires, pour faciliter leur déformation, tout en conservant une certaine rigidité. Les butées inférieures 28 sont par exemple montées autour de pieds cruciformes 29 issus de la face inférieure de l'embase 15.

Le fonctionnement de la présente invention est le suivant.

L'utilisateur place le récipient de travail 3 sur la base motorisée 2, puis dispose le réceptacle interne 11 dans le récipient de travail 3. L'organe d'entraînement en rotation 8 s'étend alors à l'intérieur de la cheminée axiale 26. Une nervure annulaire 27 issue de l'embase 15 s'étendant autour de l'organe d'entraînement en rotation 8 permet de centrer le réceptacle interne 11 dans le récipient de travail 3. L'utilisateur dispose ensuite l'outil de travail rotatif accessoire 12 dans le réceptacle interne 11. L'outil de travail rotatif accessoire 12 peut alors être entraîné par l'organe d'entraînement en rotation 8. Le réceptacle interne 11 permet de réaliser une préparation mélangée dans la cuve 16 par l'outil de travail rotatif accessoire 12.

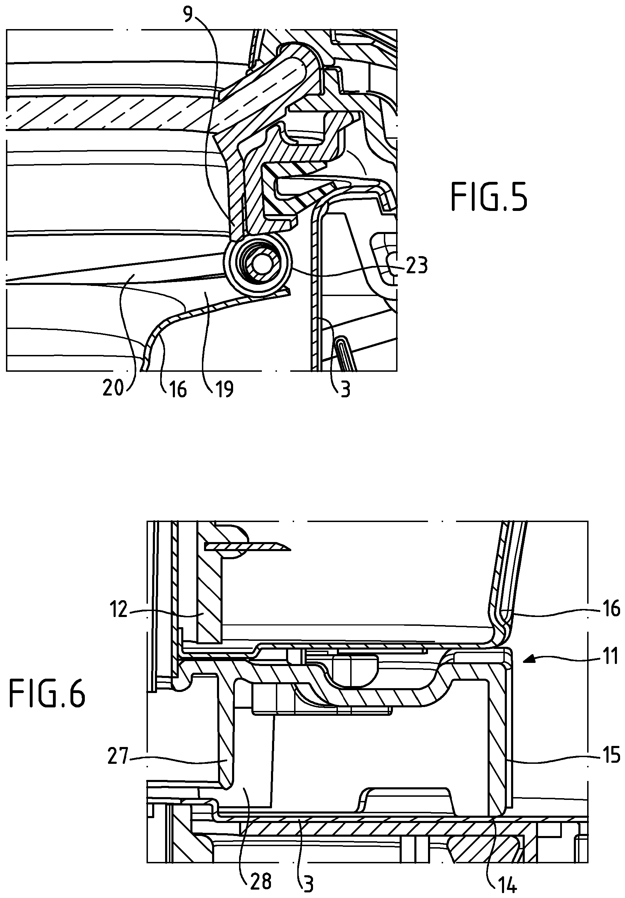

Tel que visible sur les figures 3 et 5, les anses rabattables 20 du réceptacle interne 11 sont disposées en position rabattue. Les anses rabattables 20 reposent alors sur le bord supérieur 19 de la cuve 16. Plus particulièrement, chaque organe d'appui 23 repose sur le bord supérieur 19 de la cuve 16 lorsque l'anse rabattable 20 correspondante est disposée en position rabattue, tel que visible sur la figure 5.

Tel que visible sur les figures 3 et 5, le couvercle d'accessoire 13 repose sur le bord supérieur 19 de la cuve 16. Toutefois les anses rabattables 20 reposent sur le bord supérieur 19 de la cuve 16 à l'extérieur du couvercle d'accessoire 13, tel que visible sur la figure 3. Ainsi les anses rabattables 20 sont librement mobiles entre la position rabattue et la position relevée, et vice-versa, lorsque le couvercle d'accessoire 13 est disposé sur la cuve 16. Lorsque lesdites anses rabattables 20 sont disposées en position rabattue, le couvercle d'accessoire 13 peut être retiré de la cuve 16 ou être mis en place sur la cuve 16 sans déplacer lesdites anses rabattables 20.

Le couvercle d'accessoire 13 comporte deux éléments de préhension 13a, 13b opposés qui peuvent être disposés sur le bord supérieur 19 de la cuve 16 en regard des organes de préhension 24, tel que représenté sur la figure 3. Toutefois le couvercle d'accessoire 13 peut être mis en place sur la cuve 16 sans orientation particulière. Le couvercle d'accessoire 13 peut notamment occuper une position dans laquelle les éléments de préhension 13a, 13b sont agencés entre les extrémités 21, 22 des anses rabattables 20. A cet effet les éléments de préhension 13a, 13b peuvent s'étendre entre les pattes 31 recevant pivotantes les extrémités 21, 22 des anses rabattables 20.

Tel que représenté sur la figure 5, le couvercle principal 9 ferme le récipient de travail 3. Le couvercle principal 9 fermant le récipient de travail 3 est retenu axialement sur le récipient de travail 3. Le réceptacle interne 11 est disposé dans le récipient de travail 3. L'appareil électroménager de préparation culinaire 1 et l'accesoire de préparation culinaire 10 sont dimensionnés pour que le couvercle principal 9 fermant le récipient de travail 3 déforme élastiquement les organes d'appui 23 pour bloquer le réceptacle interne 11 disposé dans le récipient de travail 3. Lorsque le couvercle principal 9 ferme le récipient de travail 3, le couvercle principal 9 comprime les organes d'appui 23, afin de déformer élastiquement les organes d'appui 23 et de bloquer le réceptacle interne 11 disposé dans le récipient de travail 3. Ainsi les organes d'appui 23 sont comprimés entre le couvercle principal 9 et le réceptacle interne 11.

Tel que visible sur la figure 6, les butées inférieures 28 du réceptacle interne 11 s'étendent à distance du fond du récipient de travail 3.

Ainsi le réceptacle interne 11 est maintenu entre le couvercle principal 9 et le fond du récipient de travail 3 lorsque le couvercle principal 9 ferme le récipient de travail 3. La déformation élastique des organes d'appui 23 permet de contribuer au blocage en rotation du réceptacle interne 11 disposé dans le récipient de travail 3. Le réceptacle interne 11 peut être simplement posé dans le récipient de travail 3 par rapport à L'organe d'entraînement en rotation 8, sans indexation particulière. L'organe d'entraînement en rotation 8 engagé dans la cheminée de la cuve 16 permet de centrer le réceptacle interne 11 dans le récipient de travail 3.

A titre de variante, chacune des anses rabattables 20 peut avantageusement comporter au moins un organe d'appui 23 réalisé en matériau souple.

A titre de variante, chacun des organes de préhension 24 peut comporter au moins un des organes d'appui 23.

A titre de variante, les organes d'appui 23 ne sont pas nécessairement annulaires. Les organes d'appui 23 n'entourent pas nécessairement chacune des anses rabattables 20, mais peuvent par exemple s'étendre entre le corps de l'une des anses rabattables 20 et le réceptacle interne 11, et/ou entre le corps de l'une des anses rabattables 20 et le couvercle principal 9.

A titre de variante, l'embase 15 n'est pas nécessairement assemblée avec la cuve 16. L'embase 15 pourrait notamment être issue de la cuve 16.

A titre de variante, le couvercle principal 9 n'est pas nécessairement retenu avec le récipient de travail 3, mais peut par exemple être retenu avec la base motorisée 2.

A titre de variante, les butées inférieures 28 ne sont pas nécessairement formées par des éléments tubulaires élastiquement déformables. Les butées inférieures 28 peuvent être élastiquement déformables sans être nécessairement entièrement réalisées en matériau souple. Les butées inférieures 28 peuvent notamment comporter un élément élastiquement déformable tel qu'un patin inférieur d'appui. Les butées inférieures 28 peuvent être prévues pour prendre appui dans le récipient de travail 3 lorsque le réceptacle interne 11 est disposé dans le récipient de travail 3. Le couvercle principal 9 fermant le récipient de travail 3 déforme alors élastiquement les butées inférieures 28 pour bloquer le réceptacle interne 11 dans le récipient de travail 3. Une telle disposition peut être envisagée en complément ou en substitution de la déformation élastique des organes d'appui 23 par le couvercle principal 9.

La présente invention n'est nullement limitée à l'exemple de réalisation décrit et à ses variantes, mais englobe de nombreuses modifications dans le cadre des revendications.

## Revendications

1. Appareil électroménager de préparation culinaire (1), comportant un récipient de travail (3), un couvercle principal (9) fermant le récipient de travail (3), un organe d'entraînement en rotation (8) agencé dans le récipient de travail (3), un réceptacle interne (11) disposé dans le récipient de travail (3), et un outil de travail rotatif accessoire (12) agencé dans le réceptacle interne (11) et entraîné en rotation par l'organe d'entraînement en rotation (8), le réceptacle interne (11) comprenant une surface d'appui inférieure (14) reposant à l'intérieur du récipient de travail (3), le réceptacle interne (11) comprenant une cuve (16) présentant un fond (17) et une paroi latérale (18), la paroi latérale (18) présentant un bord supérieur (19), **caractérisé en ce que** le réceptacle interne (11) comporte deux anses rabattables (20) montées pivotantes entre une position rabattue et une position relevée, les deux anses rabattables (20) étant de préférence agencées de manière symétrique par rapport à la cuve (16), et **en ce que** le couvercle principal (9) fermant le récipient de travail (3) prend appui sur les anses rabattables (20) disposées en position rabattue lorsque le réceptacle interne (11) est en place dans le récipient de travail (3).

2. Appareil électroménager de préparation culinaire (1) selon la revendication 1, **caractérisé en ce que** chacune des anses rabattables (20) comporte deux extrémités (21, 22) montées pivotantes sur la cuve (16).

3. Appareil électroménager de préparation culinaire (1) selon la revendication 2, **caractérisé en ce que** chacune des extrémités (21, 22) est montée pivotante dans un logement (30) ménagé dans une patte (31) issue du bord supérieur (19) de la cuve (16).

4. Appareil électroménager de préparation culinaire (1) selon l'une des revendications 1 à 3, **caractérisé en ce que** chacune des anses rabattables (20) comporte au moins un organe d'appui (23) réalisé en matériau souple.

5. Appareil électroménager de préparation culinaire (1) selon la revendication 4, **caractérisé en ce que** chacune des anses rabattables (20) comporte au moins un organe de préhension (24) réalisé en matériau souple, et **en ce que** de préférence chacun des organes de préhension (24) comporte au moins un des organes d'appui (23).

6. Appareil électroménager de préparation culinaire (1) selon l'une des revendications 1 à 5, **caractérisé en ce que** les anses rabattables (20) reposent sur le bord supérieur (19) de la cuve (16) lorsque lesdites anses rabattables (20) sont disposées en position rabattue.

7. Appareil électroménager de préparation culinaire (1) selon l'une des revendications 4 ou 5 et selon la revendication 6, **caractérisé en ce que** lesdits organes d'appui (23) reposent sur le bord supérieur (19) de la cuve (16) lorsque les anses rabattables (20) sont disposées en position rabattue.

8. Appareil électroménager de préparation culinaire (1) selon l'une des revendications 1 à 7, **caractérisé en ce que** la cuve (16) est métallique.

9. Appareil électroménager de préparation culinaire (1) selon l'une des revendications 1 à 8, **caractérisé en ce que** la cuve (16) comporte une cheminée axiale (26) issue du fond (17).

10. Appareil électroménager de préparation culinaire (1) selon l'une des revendications 1 à 9, **caractérisé en ce qu'**il comporte des moyens de chauffe (5) pour chauffer le récipient de travail (3).

11. Appareil électroménager de préparation culinaire (1) selon la revendication 10, **caractérisé en ce que** le récipient de travail (3) est métallique et que les moyens de chauffe (5) sont portés par le récipient de travail (3).

12. Appareil électroménager de préparation culinaire (1) selon la revendication 11, **caractérisé en ce que** le récipient de travail (3) est monté amovible sur une base motorisée (2) et **en ce que** la base motorisée (2) entraîne en rotation l'organe d'entraînement en rotation (8) lorsque le récipient de travail (3) est en place sur la base motorisée (2).

13. Appareil électroménager de préparation culinaire (1) selon l'une des revendications 4, 5 ou 7, **caractérisé en ce que** le couvercle principal (9) fermant le récipient de travail (3) comprime les organes d'appui (23) lorsque les anses rabattables (20) du réceptacle interne (11) disposé dans le récipient de travail (3) sont disposées en position rabattue et reposent sur le bord supérieur (19) de la cuve (16), pour déformer élastiquement les organes d'appui (23) et bloquer le réceptacle interne (11) disposé dans le récipient de travail (3).

14. Appareil électroménager de préparation culinaire (1) selon l'une des revendications 1 à 13, **caractérisé en ce que** le réceptacle interne (11) comporte une embase (15) portant des butées inférieures (28) élastiquement déformables, **en ce que** les butées inférieures (28) sont prévues pour prendre appui dans le récipient de travail (3) lorsque le réceptacle interne (11) est disposé dans le récipient de travail (3), et **en ce que** le couvercle principal (9) fermant le récipient de travail (3) déforme élastiquement les butées inférieures (28) pour bloquer le réceptacle interne (11) dans le récipient de travail (3).

15. Appareil électroménager de préparation culinaire (1) selon l'une des revendications 1 à 14, **caractérisé en ce que** le couvercle principal (9) comporte une surface inférieure d'appui annulaire prenant appui sur les anses rabattables (20) disposées en position rabattue lorsque le réceptacle interne (11) est en place dans le récipient de travail (3), et le récipient de travail (3) comporte une surface supérieure d'appui annulaire portant le réceptacle interne (11) en place dans le récipient de travail (3).

## Patentansprüche

1. Nahrungsmittelzubereitungs-Elektrohaushaltsgerät (1), das einen Arbeitsbehälter (3), einen Hauptdeckel (9), der den Arbeitsbehälter (3) verschließt, ein Drehantriebselement (8), das in dem Arbeitsbehälter (3) eingerichtet ist, eine Innenaufnahme (11), die in dem Arbeitsbehälter (3) angeordnet ist, und ein drehendes Arbeitszubehörwerkzeug (12), das in der Innenaufnahme (11) eingerichtet und in Drehung von dem Drehantriebselement (8) angetrieben ist, umfasst, wobei die Innenaufnahme (11) eine untere Auflageoberfläche (14) umfasst, die in dem Inneren des Arbeitsbehälters (3) ruht, wobei die Innenaufnahme (11) eine Wanne (16) umfasst, die einen Grund (17) und eine Seitenwand (18) aufweist, wobei die Seitenwand (18) einen oberen Rand (19) aufweist, **dadurch gekennzeichnet, dass** die Innenaufnahme (11) zwei herunterklappbare Henkel (20) umfasst, die zwischen einer heruntergeklappten Position und einer aufgestellten Position schwenkbar montiert sind, wobei die zwei herunterklappbaren Henkel (20) bevorzugt symmetrisch zu der Wanne (16) eingerichtet sind, und dass der Hauptdeckel (9), der den Arbeitsbehälter (3) verschließt, auf den herunterklappbaren Henkeln (20), die in heruntergeklappter Position angeordnet sind, wenn die Innenaufnahme (11) in dem Arbeitsbehälter (3) an Ort und Stelle ist, aufliegt.

2. Nahrungsmittelzubereitungs-Elektrohaushaltsgerät (1) nach Anspruch 1, **dadurch gekennzeichnet, dass** jeder der herunterklappbaren Henkel (20) zwei Enden (21, 22), die schwenkend auf der Wanne (16) montiert sind, umfasst.

3. Nahrungsmittelzubereitungs-Elektrohaushaltsgerät (1) nach Anspruch 2, **dadurch gekennzeichnet, dass** jedes der Enden (21, 22) in einer Aufnahme (30), die in einer Pratze (31), die aus dem oberen Rand (19) der Wanne (16) hervorgeht, schwenkend eingerichtet ist.

4. Nahrungsmittelzubereitungs-Elektrohaushaltsgerät (1) nach einem der Ansprüche 1 bis 3, **dadurch gekennzeichnet, dass** jeder der herunterklappbaren Henkel (20) mindestens ein Stützelement (23), das aus einem geschmeidigen Material hergestellt ist, umfasst.

5. Nahrungsmittelzubereitungs-Elektrohaushaltsgerät (1) nach Anspruch 4, **dadurch gekennzeichnet, dass** jeder der herunterklappbaren Henkel (20) mindestens ein Greifelement (24) umfasst, das aus einem geschmeidigen Material hergestellt ist, und dass bevorzugt jedes der Greifelemente (24) mindestens eines der Stützelemente (23) umfasst.

6. Nahrungsmittelzubereitungs-Elektrohaushaltsgerät (1) nach einem der Ansprüche 1 bis 5, **dadurch gekennzeichnet, dass** die herunterklappbaren Henkel (20) auf dem oberen Rand (19) der Wanne (16) ruhen, wenn die herunterklappbaren Henkel (20) in heruntergeklappter Position angeordnet sind.

7. Nahrungsmittelzubereitungs-Elektrohaushaltsgerät (1) nach einem der Ansprüche 4 oder 5 und nach Anspruch 6, **dadurch gekennzeichnet, dass** die Stützelemente (23) auf dem oberen Rand (19) der Wanne (16) ruhen, wenn die herunterklappbaren Henkel (20) in heruntergeklappter Position angeordnet sind.

8. Nahrungsmittelzubereitungs-Elektrohaushaltsgerät (1) nach einem der Ansprüche 1 bis 7, **dadurch gekennzeichnet, dass** die Wanne (16) metallisch ist.

9. Nahrungsmittelzubereitungs-Elektrohaushaltsgerät (1) nach einem der Ansprüche 1 bis 8, **dadurch gekennzeichnet, dass** die Wanne (16) einen axialen Schacht (26), der aus dem Grund (17) hervorgeht, umfasst.

10. Nahrungsmittelzubereitungs-Elektrohaushaltsgerät (1) nach einem der Ansprüche 1 bis 9, **dadurch gekennzeichnet, dass** es Heizmittel (5) zum Beheizen des Arbeitsbehälters (3) umfasst.

11. Nahrungsmittelzubereitungs-Elektrohaushaltsgerät (1) nach Anspruch 10, **dadurch gekennzeichnet, dass** der Arbeitsbehälter (3) metallisch ist, und dass die Heizmittel (5) von dem Arbeitsbehälter (3) getragen werden.

12. Nahrungsmittelzubereitungs-Elektrohaushaltsgerät (1) nach Anspruch 11, **dadurch gekennzeichnet, dass** der Arbeitsbehälter (3) abnehmbar auf einer motorisierten Basis (2) montiert ist, und dass die motorisierte Basis (2) das Drehantriebselement (8) in Drehung antreibt, wenn der Arbeitsbehälter (3) auf der motorisierten Basis (2) an Ort und Stelle ist.

13. Nahrungsmittelzubereitungs-Elektrohaushaltsgerät (1) nach einem der Ansprüche 4, 5 oder 7, **dadurch gekennzeichnet, dass** der Hauptdeckel (9), der den Arbeitsbehälter (3) verschließt, die Stützelemente (23) komprimiert, wenn die herunterklappbaren Henkel (20) der Innenaufnahme (11), die in dem Arbeitsbehälter (3) angeordnet ist, in heruntergeklappter Positionen angeordnet sind und auf dem oberen Rand (19) der Wanne (16) ruhen, um die Stützelemente (23) elastisch zu verformen und die Innenaufnahme (11), die in dem Arbeitsbehälter (3) angeordnet ist, zu blockieren.

14. Nahrungsmittelzubereitungs-Elektrohaushaltsgerät (1) nach einem der Ansprüche 1 bis 13, **dadurch gekennzeichnet, dass** die Innenaufnahme (11) eine Grundplatte (15) umfasst, die untere Anschläge (28), die elastisch verformbar sind, trägt, dass die unteren Anschläge (28) dazu vorgesehen sind, in dem Arbeitsbehälter (3) aufzuliegen, wenn die Innenaufnahme (11) in dem Arbeitsbehälter (3) angeordnet ist, und dass der Hauptdeckel (9), der den Arbeitsbehälter (3) verschließt, die unteren Anschläge (28) elastisch verformt, um die Innenaufnahme (11) in dem Arbeitsbehälter (3) zu blockieren.

15. Nahrungsmittelzubereitungs-Elektrohaushaltsgerät (1) nach einem der Ansprüche 1 bis 14, **dadurch gekennzeichnet, dass** der Hauptdeckel (9) eine innere ringförmige Auflageoberfläche umfasst, die sich auf den herunterklappbaren Henkeln (20), die in heruntergeklappter Positionen angeordnet sind, wenn die Innenaufnahme (11) in dem Arbeitsbehälter (3) an Ort und Stelle ist, abstützen, und der Arbeitsbehälter (3) eine obere ringförmige Auflageoberfläche umfasst, die die Innenaufnahme (11) an Ort und Stelle in dem Arbeitsbehälter (3) trägt.

## Claims

1. Food preparation kitchen appliance (1), comprising a working recipient (3), a main cover (9) closing the working recipient (3), a member for driving in rotation (8) arranged in the working recipient (3), an internal receptacle (11) arranged in the working recipient (3), and an accessory rotating working tool (12) arranged in the internal receptacle (11) and driven in rotation by the member for driving in rotation (8), the internal receptacle (11) comprising a lower bearing surface (14) resting inside the working recipient (3), the internal receptacle (11) comprising a tank (16) having a bottom (17) and a side wall (18), the side wall (18) having an upper edge (19), **characterised in that** the internal receptacle (11) comprises two foldable handles (20) pivotably mounted between a folded position and a raised position, the two foldable handles (20) being preferably arranged symmetrically with respect to the tank (16), and **in that** the main cover (9) closing the working recipient (3) bears against the foldable handles (20) disposed in the folded position when the internal receptacle (11) is in place in the working recipient (3).

2. Food preparation kitchen appliance (1) according to claim 1, **characterised in that** each one of the foldable handles (20) comprises two ends (21, 22) pivotably mounted on the tank (16).

3. Food preparation kitchen appliance (1) according to claim 2, **characterised in that** each one of the ends (21, 22) is pivotably mounted in a housing (30) arranged in a tab (31) coming from the upper edge (19) of the tank (16).

4. Food preparation kitchen appliance (1) according to one of claims 1 to 3, **characterised in that** each one of the foldable handles (20) comprises at least one bearing member (23) made from a flexible material.

5. Food preparation kitchen appliance (1) according to claim 4, **characterised in that** each one of the foldable handles (20) comprises at least one gripping member (24) made from a flexible material, and **in that** preferably each one of the gripping members (24) comprises at least one of the bearing members (23).

6. Food preparation kitchen appliance (1) according to one of claims 1 to 5, **characterised in that** the foldable handles (20) rest on the upper edge (19) of the tank (16) when said foldable handles (20) are disposed in the folded position.

7. Food preparation kitchen appliance (1) according to one of claims 4 or 5 and according to claim 6, **characterised in that** said bearing members (23) rest on the upper edge (19) of the tank (16) when the foldable handles (20) are disposed in the folded position.

8. Food preparation kitchen appliance (1) according to one of claims 1 to 7, **characterised in that** the tank (16) is metallic.

9. Food preparation kitchen appliance (1) according to one of claims 1 to 8, **characterised in that** the tank (16) comprises an axial chimney (26) coming from the bottom (17).

10. Food preparation kitchen appliance (1) according to one of claims 1 to 9, **characterised in that** it comprises heating means (5) for heating the working recipient (3).

11. Food preparation kitchen appliance (1) according to claim 10, **characterised in that** the working recipient (3) is metallic and that the heating means (5) are carried by the working recipient (3).

12. Food preparation kitchen appliance (1) according to claim 11, **characterised in that** the working recipient (3) is removably mounted on a motorised base (2) and **in that** the motorised base (2) drives in rotation the member for driving in rotation (8) when the working recipient (3) is in place on the motorised base (2).

13. Food preparation kitchen appliance (1) according to one of claims 4, 5 or 7, **characterised in that** the main cover (9) closing the working recipient (3) compresses the bearing members (23) when the foldable handles (20) of the internal receptacle (11) disposed in the working recipient (3) are disposed in the folded position and rest on the upper edge (19) of the tank (16), in order to elastically deform the bearing members (23) and block the internal receptacle (11) disposed in the working recipient (3).

14. Food preparation kitchen appliance (1) according to one of claims 1 to 13, **characterised in that** the internal receptacle (11) comprises a base (15) carrying elastically deformable lower stops (28), **in that** the lower stops (28) are provided to bear against in the working recipient (3) when the internal receptacle (11) is disposed in the working recipient (3), and **in that** the main cover (9) closing the working recipient (3) elastically deforms the lower stops (28) in order to block the internal receptacle (11) in the working recipient (3).

15. Food preparation kitchen appliance (1) according to one of claims 1 to 14 , **characterised in that** the main cover (9) comprises a lower annular bearing surface bearing on the foldable handles (20) arranged in folded position when the internal receptacle (11) is in place in the working recipient (3), and the working recipient (3) comprises an upper annular bearing surface carrying the internal receptacle (11) in place in the working recipient (3).
